# EUROPÄISCHE PATENTSCHRIFT

(11) **EP 2 523 797 B1**
(45) Veröffentlichungstag und Bekanntmachung des Hinweises auf die Patenterteilung: **23.07.2014**
(21) Anmeldenummer: 11701217.9
(22) Anmeldetag: 14.01.2011
(51) Int. Cl.: B29C 47/68, B01D 29/41

(54) **SIEBTRÄGERELEMENT FÜR EINE FILTRIEREINRICHTUNG MIT WENIGSTENS EINER SIEBKAVITÄT**
SCREEN CARRIER ELEMENT FOR A FILTRATION DEVICE HAVING AT LEAST ONE SCREEN CAVITY
ÉLÉMENT PORTE-CRIBLE POUR UN DISPOSITIF DE FILTRATION AYANT AU MOINS UNE CAVITÉ DE CRIBLE

(30) Priorität: 14.01.2010 DE 102010000925
(43) Veröffentlichungstag der Anmeldung: 21.11.2012
(73) Patentinhaber: Kreyenborg Verwaltungen und Beteiligungen GmbH & Co. KG, 48157 Münster (DE); Seebach GmbH, Vellmar 34246 (DE)
(72) Erfinder: WÖSTMANN, Stefan, 48336 Sassenberg (DE); GRIMM-BOSBACH, Thomas, 34131 Kassel (DE)
(74) Vertreter: Tarvenkorn, Oliver
(86) Internationale Anmeldenummer: PCT/EP2011/050492
(87) Internationale Veröffentlichungsnummer: WO 2011/086173

(56) Entgegenhaltungen:
- EP-A2- 0 728 510
- WO-A1-95/01823
- DE-A1- 4 212 928
- DE-U1- 29 520 418

## Beschreibung

Die Erfindung betrifft ein Siebträgerelement für eine Filtriereinrichtung mit wenigstens einer Siebkavität, in der wenigstens eine Filtereinheit anzuordnen ist, welche ein Stützrohr mit Ausnehmungen und mehrere Scheibenfilterelemente umfasst, wobei die Scheibenfilterelemente jeweils wenigstens eine zentrale Nabe aufweisen, mit welcher sie auf dem Stützrohr gelagert sind, und ein die Nabe umgebendes, halbdurchlässiges Filtermedium, das zu einem dreidimensionalen Gebilde aufgespannt ist, wobei sich in dem Nabenelement wenigstens ein Fließkanal von dem durch das Filtermedium umspannten Volumen bis zum Stützrohr erstreckt und wobei das Stützrohr in einem Austrittskanal des Siebträgerelements mündet.

Ein solches Siebträgerelement ist in der DE 10 2007 006 811 A1 beschrieben. Die aufeinander gestapelten Scheibenfilterelemente führen zu einer deutlichen Vergrößerung der Filterfläche, ohne dass die Siebkavität zur Aufnahme der Filtereinheit vergrößert zu werden braucht.

Bei dem bekannten Siebträgerelement ist das Stützrohr in eine Zwischenplatte eingeschraubt und es dient gleichzeitig dazu, gegeneinander geschichtete Scheibenträgerelemente gegen die Zwischenplatte zu pressen. Die Zwischenplatte ist in eine Ausnehmung am Grund der Siebkavität eingesetzt ist. Hieraus ergeben sich mehrere Nachteile:
- Die dicke Zwischenplatte nimmt eine Bauhöhe im Siebträgerelement ein, die etwa 3-4 übereinandergeschichteten Scheibenfilterelementen entspricht. Entsprechend ist die Zahl der Scheibenfilterelemente geringer als sie nach dem Volumen der Siebkavität sein könnte
- Das in die Zwischenplatte eingeschraubte Stützrohr wird bei einem Schmelzezufluss, der von außerhalb des Zentrums der Siebkavität und nicht orthogonal erfolgt, auf Biegung beansprucht. Kommt es dadurch zu Verformungen am Stützrohr, kann das zum Wechseln der Schadenfilterelemente erforderliche Herausschrauben erschwert oder verhindert werden.
- In jedem Fall nimmt die montageunfreundliche Schraubverbindung des Stützrohrs den Zeitvorteil, den wechselbare Siebträgerelemente in Filtereinrichtungen bringen.
- Die Zwischenplatte und der Boden der Aufnahme müssen eine hohe Planparallelität aufweisen, da ansonsten keine Dichtigkeit gewährleistet ist.
- Die Demontage der Filtereinheit ist erschwert, wenn die Zwischenplatte in der zylindrischen Vertiefung im Siebbolzen verkantet oder durch in den Spalt eingedrungene Kunststoffreste blockiert ist.

Weitere Siebträgerelemente für eine Filtriereinrichtung sind aus der EP 0 728 512 A2 und der DE 29 520 418 U1 bekannt.

Aufgabe der Erfindung ist es daher, ein Siebträgerelement der eingangs genannten Art so weiterzuentwickeln, dass der Austausch der Filtereinheiten an den Siebträgerelementen erleichtert ist.

Diese Aufgabe wird gemäß der vorliegenden Erfindung dadurch gelöst, dass das Stützrohr einen unterhalb der Scheibenfilterelemente hervor ragenden Lagerabschnitt aufweist, der von der Siebkavität aus in den Austrittskanal einsteckbar ist und dass der Austrittskanal über wenigstens einen Teil seiner Länge als eine Kegelbohrung ausgebildet ist, welche sich in Richtung der Siebkavität öffnet, wobei der Lagerabschnitt des Stützrohrs wenigstens einen Kegelabschnitt aufweist, der in die wenigstens eine Kegelbohrung eingreift.

Dadurch, dass das Stützrohr der Filtereinheit im Austrittskanal des Siebträgers gelagert ist, können Hebelkräfte aus dem Schmelzefluss abgefangen werden, wenn die Schmelze nicht zentral und orthogonal auf die Filtereinheit zugeleitet wird.

Die Montage ist sehr einfach, da die Filtereinheit lediglich mit dem unten aus dem Paket von Scheibenfilterelementen herausragenden Lagerabschnitt in den Austrittskanal eingeschoben zu werden braucht.

Der wenigstens eine Kegelabschnitt am unteren Teil des Stützrohrs wird dabei in den zumindest teilweise als Kegelbohrung ausgebildeten Austrittskanal eingeschoben. Dadurch wird das Stützrohr axial festgelegt und zugleich wird am gesamten Umfang des Kegelabschnitts eine Abdichtung gegenüber dem Siebträgerelement bewirkt. Sobald der Schmelzedruck auf die Filtereinheit wirkt, wird diese mit dem Kegelabschnitt des Stützrohrs in den kegelförmigen Bereich des Austrittskanals gepresst, ohne dass zuvor das Aufbringen einer Vorspannung erforderlich ist.

Die Anordnung des Kegelabschnitts am Stützrohr kann in verschiedener Weise erfolgend:
- Der Lagerabschnitt des Stützrohrs kann ein zylindrisches Ende aufweisen und einen sich daran anschließenden Kegelabschnitt.
- Der Lagerabschnitt des Stützrohrs kann auch ein zylindrisches Ende aufweisen, einen sich daran anschließenden Kegelabschnitt und einen sich wiederum daran anschließenden, weiteren zylindrischen Abschnitt.
- Schließlich kann der Lagerabschnitt des Stützrohrs vollständig als Kegelabschnitt ausgebildet sein.

Wesentlich ist nur, dass ein Kegelabschnitt vorhanden ist, der die Dichtung und axiale Festlegung bewirkt.

Durch die nach der Erfindung vorgesehenen Steckmontage ergibt sich als weiterer Vorteil, dass das Stützrohr nicht durch Torsion belastet wird. Während gemäß dem Stand der Technik die gesamte Filtereinheit in das Siebträgerelement einzuschrauben ist, wobei das Stützrohr das Anzugsdrehmoment übertragen muss, entfällt bei dem Siebträgerelement der Erfindung eine solche starke Belastung des Stützrohrs. Verformungen des Stützrohrs und dadurch bedingte Undichtigkeiten der eingesetzten Filtereinheit werden vermieden.

Die Demontage ist bei dem erfindungsgemäßen Siebträgerelement dadurch wesentlich erleichtert, dass die gesamte Filtereinheit von der Ausgangsseite des Siebträgerelements her heraus gedrückt werden kann, indem man von hinten auf den dort offen liegenden Endabschnitt des Stützrohrs drückt.

Sollte die Filtereinheit einmal fest sitzen, kann von der Ausgangsseite des Siebträgerelements auch ein Schlagwerkzeug angesetzt werden, das gegen die Stirnfläche des Stützrohrs wirkt oder das in die zentrale Bohrung im Stützrohr gesteckt wird und dann von innen gegen einen sich verjüngenden Abschnitt darin wirkt.

Es wird außerdem bei dem erfindungsgemäßen Siebträgerelement der sonst im Stand der Technik für die Stützplatte benötigte Bauraum eingespart, so dass weitere Scheibenfilterelemente in die Filtereinheit integriert werden können und die wirksame Filterfläche vergrößert wird.

Weitere vorteilhafte Ausgestaltungen beziehen sich auf das Paket von Scheibenfilterelementen an der Filtereinheit.

Vorzugsweise ist an wenigstens einer der Stirnseiten der Naben der Scheibenfilterelemente jeweils wenigstens eine ringförmige Dichtfläche ausgebildet, welche in axialer Richtung über das seitlich an den übrigen Teil der Nabe angebundene Filtermedium ragt. Dabei liegen die ringförmigen Dichtflächen der aneinander gereihten Scheibenfilterelemente voreinander. Die Dichtflächen können beispielsweise geschliffen sein, so dass eine hohe Planparallelität von aneinanderliegenden Dichtflächen besteht.

Um Distanzen zwischen den Scheibenfilterelementen zu vergrößern, kann vorgesehen sein, dass zwischen den ringförmigen Dichtflächen metallische Dichtungsringe eingelegt sind, die beispielsweise aus einem Metallfaservlies bestehen können.

Vorzugsweise werden die Naben der Scheibenfilterelemente mittels eines Sicherungselements, das an dem in die Siebkavität ragenden Ende des Stützrohrs anbringbar ist, aneinandergepresst.

Somit wird sichergestellt, dass keine Schmelze in den Spalt zwischen aneinander liegenden Dichtflächen eindringt.

Zur Strömungsoptimierung der Filtereinheit kann eine Prallplatte vorgesehen sein, die vor dem in der Siebkavität zuoberst liegenden Scheibenfilterelement der Filtereinheit angeordnet ist. Sie führt die Schmelze homogen in den Ringspalt, der sich um die Scheibenfilterelemente herum erstreckt, und sorgt für eine gleichmäßige Druckverteilung in der Siebkavität.

Die Prallplatte kann mittels des Sicherungselements auf die aufeinander gestapelten Scheibenfilterelemente gepresst werden. Somit bildet die Prallplatte das oberste Element in dem Stapel mit den Scheibenfilterelementen.

Das Siebträgerelement ist vorzugsweise als ein runder Siebträgerbolzen ausgebildet, der Teil einer Filtriereinrichtung zur Filtrierung eines Fluids, vornehmlich zur Filtration von Polymerschmelzen, ist. In einem Gehäuse ist wenigstens eine Siebträgerbohrung eingebracht, in der der Siebträgerbolzen verschiebbar gelagert ist.

Das Siebträgerelement kann auch eine rechteckförmige Platte sein.

Es können mehrere Siebkavitäten vorgesehen sind, die in Fließrichtung gesehen nebeneinander oder gegenüberliegend angeordnet sind. Bei gegenüberliegender Anordnung befinden sich zwei Siebkavitäten spiegelbildlich gegenüber liegend im Siebträgerelement. Die Abfuhr des zu filtrierenden Mediums erfolgt dann aus der Mitte zwischen den Siebträgerkavitäten heraus nach oben oder unten.

Das Sicherungselement weist insbesondere einen Gewindeabsatz auf, der in eine Gewindebohrung im Stützrohr einschraubbar ist. Die Gewindebohrung kann innerhalb eines Verdrängerkonus eingebracht sein. Dieser wird im Bereich innerhalb des Stützrohrs angeordnet und weist mit seinem spitzen Ende zur Ausgangsseite. Der Verdrängerkonus verhindert die Bildung einer Totwasserzone im Endbereich des Stützrohrs und verhindert dadurch, dass sich Schmelze oder anderes filtriertes Material in diesem Bereich ablagert und dort zersetzt.

Die Ausbildung des Stützrohrs kann rund sein. Dann müssen Fließwege von den Mündungen der Fließkanäle am Innenumfang der Naben zu den Ausnehmungen im Mantel des Stützrohrs geschaffen werden. Dies kann durch auf den Außenmantel ausgebrachte Stege oder in den Außenumfang eingebrachte Nuten erreicht werden

Bevorzugt ist vorgesehen, dass das Stützrohr einen polygonalen Querschnitt aufweist. Dann sollte die Bohrung in der Nabe zylindrisch sein. Umgekehrt könnte auch die Ausnehmung in der Nabe polygonal gestaltet sein und der Mantel des Rohrs zylindrisch sein. Dadurch, dass die Formen von Stützrohraußenkontur und Nabeninnenkontur nicht übereinstimmen, entstehen dazwischen mehrere sich axial erstreckende Fließkanäle, die die Abfuhr des Mediums in das Innere des Stützrohrs erleichtern.

Die Erfindung wird nachfolgend mit Bezug auf die Zeichnung näher erläutert. Die Figuren zeigen im Einzelnen:
- Fig. 1a: ein Siebträgerelement gemäß einer ersten Ausführungsform im Schnitt;
- Fig. 1b: die Filtereinheit des Siebträgerelements aus Figur 1a in perspektivische Ansicht;
- Fig. 2: ein Siebträgerelement gemäß einer zweiten Ausführungsform im Schnitt; und
- Fig. 3: ein Detail aus Figur 1a in vergrößerter Darstellung.

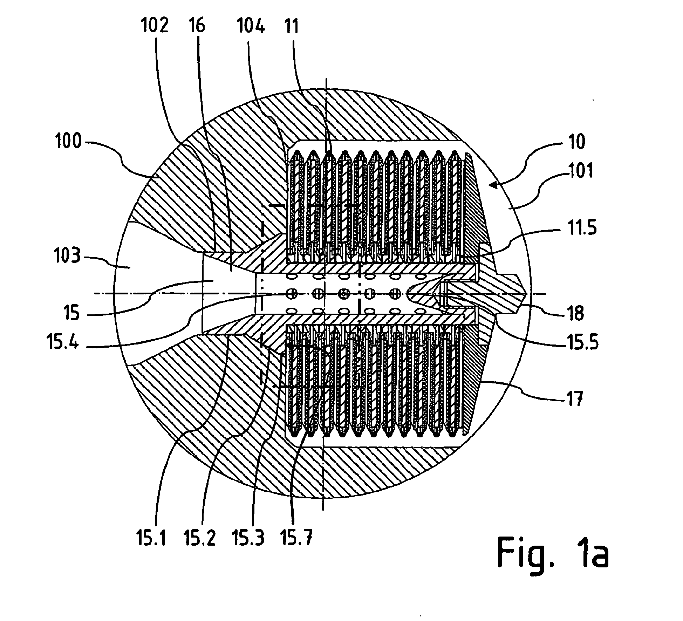

Figur 1a zeigt in einer Schnittdarstellung einen Siebträgerbolzen 100, der eine Siebkavität 101 aufweist.

Zwischen der Siebkavität 101 und einer Austrittsöffnung 103 am Außenumfang der Siebträgerbolzens 100 erstreckt sich ein Austrittskanal 102. Von der Siebkavität 101 aus gesehen besitzt der Austrittskanal 102 zunächst eine kurze zylindrische Kontur, dann einen Kegelabschnitt und zuletzt wieder einen Zylinderabschnitt, bevor er sich trichterförmig zu der Austrittsöffnung 103 weitet.

Der so beschriebenen Innenkontur des Austrittskanals 102 entspricht die Außenkontur an einem hier als Lagerabschnitt bezeichneten Ende eines Stützrohrs 15 einer Filtereinheit 10.

Der Lagerabschnitt umfasst also zwei zylindrische Abschnitte 15.1, 15.3 und einen dazwischen liegenden kegelförmigen Abschnitt 15.2.

Das hohle Stützrohr 15 weitet sich an seinem Ende innen zu einer kegelförmigen Bohrung 16 auf, wobei der Kegelwinkel der Bohrung 16 vorzugsweise auch dem Kegelwinkel an der Austrittsöffnung 103 entspricht, so dass dort ein stufenloser Übergang gegeben ist.

In der Siebkavität 101 ist der größte Teil der Filtereinheit 10 angeordnet. Mehrere ringförmige Scheibenfilterelemente 11 sind mit ihrer jeweiligen zentralen Nabe 11.5 auf das Stützrohr 15 geschoben. Das Paket von Filterelementen 11 wird an einem Absatz 15.7 am Stützrohr 15 axial festgelegt. An der anderen Seite des Pakets von Scheibenfilterelementen 11 ist eine Prallplatte 17 angeordnet, die das ganz oben im Stapel liegende Scheibenfilterelement 11 abdeckt. Ein Sicherungselement 18 ist in das Stützrohr 15 eingeschraubt und presst dadurch die Prallplatte gegen die metallischen Naben 11.5 der Scheibenfilterelemente 11 und den gesamten Stapel gegen den Absatz 15.7.

Das Stützrohr 15 besitzt in seinem Mantel eine Vielzahl von Ausnehmungen 15.4, die den Übertritt der Schmelze vom Inneren der jeweiligen Scheibenfilterelemente 11 in die zentrale Bohrung im Stützrohr 15 ermöglichen.

Ein Verdrängerkonus 15.5 im Stützrohr 15 verbessert das Fließverhalten des filtrierten Mediums im Endbereich.

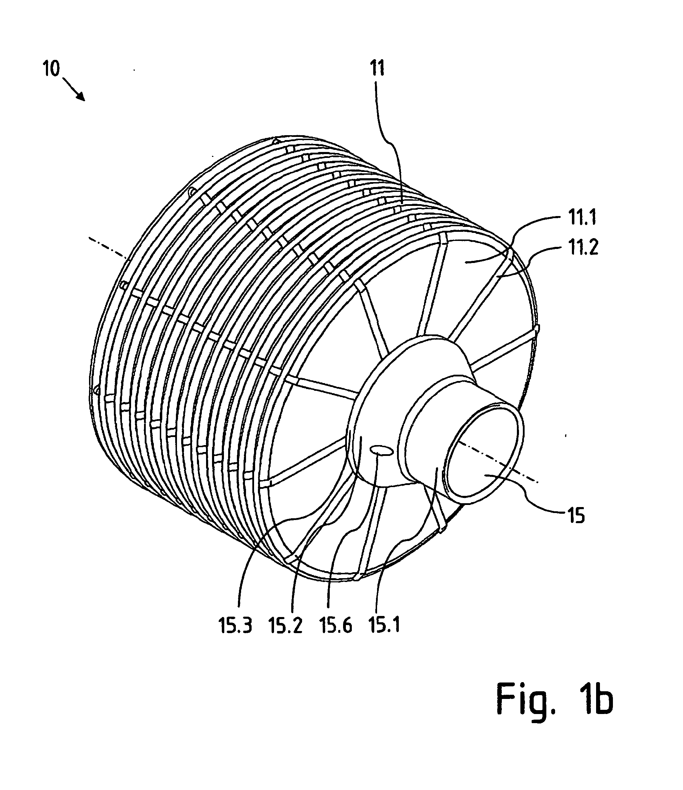

Figur 1b zeigt eine aus dem Siebträgerelement 100 entnommene Filtereinheit 10 in perspektivischer Ansicht mit Blick auf den Lagerabschnitt des Stützrohrs 15. Deutlicher sichtbar sind hier die zylindrischen Abschnitte 15.1, 15.3 und der dazwischen liegende kegelförmige Abschnitt 15.2.

In dem kegelförmigen Abschnitt 15.2 ist eine Bohrung 15.6 erkennbar. Eine weitere Bohrung ist diametral gegenüberliegend an dem kegelförmigen Abschnitt 15.2 angeordnet. Die Bohrungen 15.6 dienen als Montagehilfe. Es kann daran ein geeignetes Schlüsselwerkzeug angesetzt werden, um dem Drehmoment entgegen wirken zu können, das beim Anziehen oder Lösen des Sicherungselements entsteht. Das Sicherungselement presst am anderen Ende des Stützrohrs die Scheibenfilterelemente an. Dadurch muss die Filtereinheit nicht mit Zangen an ihrem Lagerabsatz gehalten oder gar in einen Schraubstock eingespannt werden, wodurch die kegelförmige Dichtfläche beschädigt werden könnte.

Gut erkennbar ist in Figur 1b auch der an sich bekannte Aufbau der Scheibenfilterelemente 11 an der Filtereinheit 10. Ein Abstandhalter 11.2 dient dazu, die homogene Anströmung eines dünnen, halbdurchlässigen Filtermediums zu ermöglichen. Bei dem Filtermedium kann es sich beispielsweise um ein Gewebe oder ein Vlies aus Metallfäden handeln. Durch das Filtermedium wird ein hohler Grundkörper aufgespannt.

Das zu filtrierende Medium, insbesondere eine Kunststoffschmelze, tritt durch das Filtermedium in den Grundkörper des jeweiligen Scheibenfilterelements 11 und dann durch einen Fließkanal 11.4 in der Nabe 11.5 aus und fließt durch die Ausnehmungen 15.4 bis ins Innere des Stützrohrs 15.

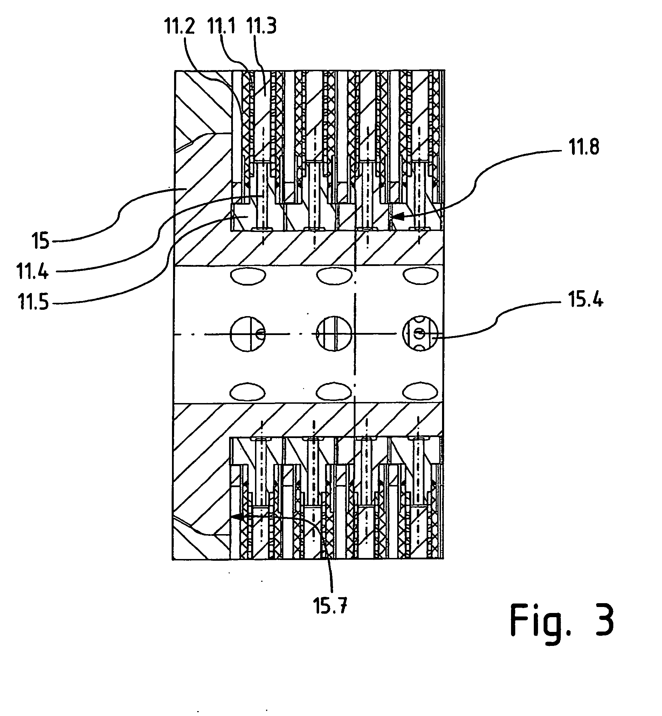

Die Figur 3 zeigt eine Vergrößerung des in Figur 1a mit einer strichpunktierten Linie eingerahmten Teils. Hierbei handelt es sich um den Bereich, in dem die ersten vier Scheibenfilterelemente 11 an den Absatz 15.7 des Stützrohrs 15 angepresst werden.

In der vergrößerten Darstellung ist der Aufbau der Scheibenfilterelemente 11 erkennbar. Die ringförmige Nabe 11.5 besitzt außen zwei Absätze mit geringerer axialer Ausdehnung als der Absatz innen. Die äußeren Absätze dienen dazu, dass das Filtermedium 11.1 und/oder der Abstandshalter 11.2 in axialer Richtung über die Dichtflächen 11.8 an der Nabe 11.5 hervor stehen und ein homogener Abstand zwischen den einzelnen Filterelementen, der durch die Absatzhöhe und die Dicke des Abstandshalters vorgegeben wird, zur Verfügung steht.

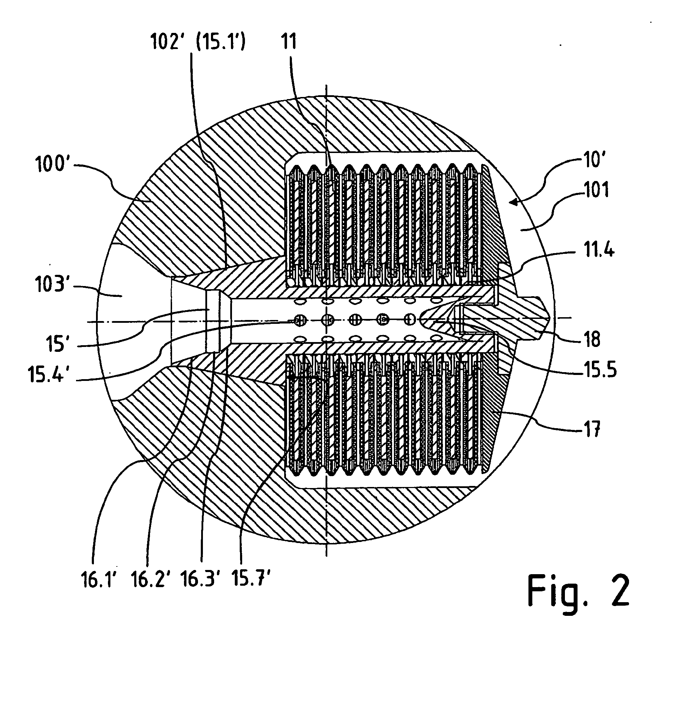

Figur 2 zeigt eine weitere Ausführungsform eines Siebträgerelements 100' mit einer Filtereinheit 10'. Unterschiedlich zu der zuvor beschriebenen Ausführungsform eines Siebträgerelements 100 ist nur, dass ein Austrittskanal 102' durchgängig als Kegelbohrung ausgebildet ist und dass entsprechend am Lagerabschnitt des Stützrohrs 15' nur ein durchgängiger Kegelabschnitt 15.1' ausgebildet ist.

Im Inneren weist das Stützrohr 15' an seinem ausgangsseitigen Ende zwei Kegelabschnitte 16.1', 16.3' und einen dazwischen liegenden zylindrischen Abschnitt 16.2' auf. Die übrigen Bereiche der Filtereinheit 10' mit den Scheibenfilterelementen 11 sind in gleicher Weise aufgebaut wie bei dem ersten Ausführungsbeispiel beschrieben.

## Patentansprüche

1. Siebträgerelement (100; 100') für eine Filtriereinrichtung
mit wenigstens einer Siebkavität (101), in der wenigstens eine Filtereinheit (10; 10') angeordnet ist, welche ein Stützrohr (15; 15') mit Ausnehmungen (15.4) und mehrere Scheibenfilterelemente (11) umfasst,
wobei die Scheibenfilterelemente (11) jeweils wenigstens eine zentrale Nabe (11.3) aufweisen, mit welcher sie auf dem Stützrohr (15; 15') gelagert sind, und ein die Nabe (11.5) umgebendes, halbdurchlässiges Filtermedium (11.1),
wobei sich in dem Nabenelement (11.5) wenigstens ein Fließkanal (11.4) von einem durch das Filtermedium (11.1) umspannten Grundkörper bis zum Stützrohr (15; 15') erstreckt
und wobei das Stützrohr (15; 15') in einem Austrittskanal (102; 102') des Siebträgerelements (100; 100') mündet,
**dadurch gekennzeichnet, dass** das Stützrohr (15; 15') einen unterhalb der Scheibenfilterelemente hervor ragenden Lagerabschnitt (15.1, 15.2; 15.1') aufweist, der von der Siebkavität (101) aus in den Austrittskanal (102) einsteckbar ist, und dass der Austrittskanal (102; 102') über wenigstens einen Teil seiner Länge als eine Kegelbohrung ausgebildet ist, welche sich in Richtung der Siebkavität (101) öffnet, wobei der Lagerabschnitt des Stützrohrs (15; 15') wenigstens einen Kegelabschnitt (15.2; 15.1') aufweist, der in die wenigstens eine Kegelbohrung eingreift.

2. Siebträgerelement (100; 100') nach Anspruch 1, **dadurch gekennzeichnet, dass** an den Stirnseiten der Naben (11.5) der Scheibenfilterelemente (11) jeweils wenigstens eine ringförmige Dichtfläche (11.8) ausgebildet ist, welche in axialer Richtung über das seitlich an den übrigen Teil der Nabe (11.5) angebundene Filtermedium (11.1) ragt, und dass bei aneinander gereihten Scheibenfilterelementen (11) die ringförmigen Dichtflächen (11.8) aneinander anliegen.

3. Siebträgerelement (100; 100') nach Anspruch 2, **dadurch gekennzeichnet, dass** zwischen den ringförmigen Dichtflächen (11.8) metallische Dichtungsringe eingelegt sind.

4. Siebträgerelement (100') nach Anspruch 2, **dadurch gekennzeichnet, dass** zwischen den ringförmigen Dichtflächen (11.8) Dichtungsringe aus einem Metallfaservlies eingelegt sind.

5. Siebträgerelement (100; 100') nach einem der Ansprüche 1 bis 4, **dadurch gekennzeichnet, dass** die Naben (11.5) der Scheibenfilterelemente (11) mittels eines Sicherungselements (18), das an dem Stützrohr (15; 15') anbringbar ist, aneinandergepresst sind.

6. Siebträgerelement (100; 100') nach Anspruch 5, **dadurch gekennzeichnet, dass** eine Prallplatte (17) mittels des Sicherungselements (18) auf die aufeinander gestapelten Scheibenfilterelemente (11) presst.

7. Siebträgerelement (100; 100') nach Anspruch 5 oder 6, **dadurch gekennzeichnet, dass** das Sicherungselement (18) einen Gewindeabsatz aufweist, der in eine Gewindebohrung im Stützrohr (15; 15') einschraubbar ist.

8. Siebträgerelement (100; 100') nach Anspruch 7, **dadurch gekennzeichnet, dass** die Gewindebohrung in einem Verdrängerkonus (15.5) angeordnet ist.

9. Siebträgerelement nach wenigstens einem der vorhergehenden Ansprüche, **dadurch gekennzeichnet, dass** das Stützrohr einen runden Querschnitt aufweist.

10. Siebträgerelement nach wenigstens einem der vorhergehenden Ansprüche, **dadurch gekennzeichnet, dass** das Stützrohr einen polygonalen Querschnitt aufweist.

11. Siebträgerelement nach wenigstens einem der vorhergehenden Ansprüche, **dadurch gekennzeichnet, dass** mehrere Siebkavitäten vorgesehen sind, die in Fließrichtung gesehen nebeneinander angeordnet sind.

12. Siebträgerelement nach wenigstens einem der vorhergehenden Ansprüche, **dadurch gekennzeichnet, dass** mehrere Siebkavitäten vorgesehen sind, die spiegelbildlich gegenüber liegend im Siebträgerelement angeordnet sind.

13. Siebträgerelement (100; 100') nach wenigstens einem der vorhergehenden Ansprüche, **dadurch gekennzeichnet, dass** das Siebträgerelement (100; 100') als ein runder Siebträgerbolzen ausgebildet ist.

14. Siebträgerelement nach wenigstens einem der vorhergehenden Ansprüche, **dadurch gekennzeichnet, dass** das Siebträgerelement eine rechteckförmige Platte ist.

15. Filtriereinrichtung zur Filtrierung eines Fluids, vornehmlich zur Filtration von Polymerschmelzen die wenigstens ein Gehäuse mit einer Siebträgerbohrung und mindestens einem darin verschiebbar gelagerten Siebträgerelement nach wenigstens einem der vorgehenden Ansprüche 1 bis 14 umfasst.

## Claims

1. Screen-carrier element (100; 100') for a filtering device,
having at least one screen cavity (101), in which is arranged at least one filter unit (10; 10'), which comprises a supporting tube (15; 15'), with apertures (15.4), and a plurality of disc filter elements (11),
wherein the disc filter elements (11) each have at least one central hub (11.3), by means of which they are mounted on the supporting tube (15; 15'), and a semi-permeable filter medium (11.1), which encloses the hub (11.5),
wherein at least one flow channel (11.4) extends in the hub element (11.5) from a main body, encompassed by the filter medium (11.1), as far as the supporting tube (15; 15'),
and wherein the supporting tube (15; 15') opens out into an exit channel (102; 102') of the screen-carrier element (100; 100'),
**characterized in that** the supporting tube (15; 15') has a bearing portion (15.1, 15.2; 15.1') which projects from beneath the disc filter elements and can be plugged into the exit channel (102) from the screen cavity (101), and **in that** the exit channel (102; 102'), over at least part of its length, is designed in the form of a conical bore which opens in the direction of the screen cavity (101), wherein the bearing portion of the supporting tube (15; 15') has at least one conical portion (15.2; 15.1'), which engages in the at least one conical bore.

2. Screen-carrier element (100; 100') according to Claim 1, **characterized in that** each of the ends of the hubs (11.5) of the disc filter elements (11) have formed on them at least one annular sealing surface (11.8), which projects axially beyond the filter medium (11.1), which is attached laterally to the rest of the hub (11.5), and **in that**, with the disc filter elements (11) lined up in a row, the annular sealing surfaces (11.8) butt against one another.

3. Screen-carrier element (100; 100') according to Claim 2, **characterized in that** metallic sealing rings are introduced between the annular sealing surfaces (11.8).

4. Screen-carrier element (100') according to Claim 2, **characterized in that** sealing rings made of a metal-fibre nonwoven are introduced between the annular sealing surfaces (11.8).

5. Screen-carrier element (100; 100') according to one of Claims 1 to 4, **characterized in that** the hubs (11.5) of the disc filter elements (11) are pressed one against the other by means of a securing element (18), which can be fitted on the supporting tube (15; 15').

6. Screen-carrier element (100; 100') according to Claim 5, **characterized in that** the securing element (18) presses a baffle plate (17) onto the disc filter elements (11) stacked one upon the other.

7. Screen-carrier element (100; 100') according to Claim 5 or 6, **characterized in that** the securing element (18) has a threaded shoulder, which can be screwed into a threaded bore in the supporting tube (15; 15').

8. Screen-carrier element (100; 100') according to Claim 7, **characterized in that** the threaded bore is arranged in a displacer cone (15.5).

9. Screen-carrier element according to at least one of the preceding claims, **characterized in that** the supporting tube has a round cross section.

10. Screen-carrier element according to at least one of the preceding claims, **characterized in that** the supporting tube has a polygonal cross section.

11. Screen-carrier element according to at least one of the preceding claims, **characterized in that** a plurality of screen cavities arranged one beside the other in the flow direction are provided.

12. Screen-carrier element according to at least one of the preceding claims, **characterized in that** a plurality of screen cavities located opposite one another in mirror-inverted fashion in the screen-carrier element are provided.

13. Screen-carrier element (100; 100') according to at least one of the preceding claims, **characterized in that** the screen-carrier element (100; 100') is designed in the form of a round screen-carrier bolt.

14. Screen-carrier element according to at least one of the preceding claims, **characterized in that** the screen-carrier element is a rectangular plate.

15. Filtering device for filtering a fluid, predominantly for filtering polymer melts, which comprises at least one housing with a screen-carrier bore and at least one screen-carrier element, mounted in a displaceable manner therein, according to at least one of preceding Claims 1 to 14.

## Revendications

1. Élément porte-crible (100 ; 100') pour un dispositif de filtration comprenant au moins une cavité de crible (101), dans laquelle est disposée au moins une unité de filtre (10 ; 10'), laquelle comprend un tube de support (15 ; 15') avec des évidements (15.4) et plusieurs éléments de filtre en forme de disques (11), les éléments de filtre en forme de disques (11) présentant à chaque fois au moins un moyeu central (11.3), avec lequel ils sont supportés sur le tube de support (15 ; 15'), et un milieu filtrant (11.1) semi-perméable, entourant le moyeu (11.5),
au moins un canal d'écoulement (11.4) s'étendant dans l'élément de moyeu (11.5) depuis un corps de base recouvert par le milieu filtrant (11.1) jusqu'au tube de support (15 ; 15') et le tube de support (15 ; 15') débouchant dans un canal de sortie (102 ; 102') de l'élément porte-crible (100 ; 100'),
**caractérisé en ce que** le tube de support (15 ; 15') présente une portion de palier (15.1, 15.2 ; 15.1') faisant saillie en dessous des éléments de filtre en forme de disques, laquelle peut être enfichée depuis la cavité de crible (101) dans le canal de sortie (102), et **en ce que** le canal de sortie (102 ; 102') est réalisé sur au moins une partie de sa longueur sous forme d'alésage conique, qui s'ouvre dans la direction de la cavité de crible (101), la portion de palier du tube de support (15 ; 15') présentant au moins une portion conique (15.2 ; 15.1'), qui vient en prise dans l'au moins un alésage conique.

2. Élément porte-crible (100 ; 100') selon la revendication 1, **caractérisé en ce qu'**au niveau des côtés frontaux des moyeux (11.5) des éléments de filtre en forme de disques (11) est à chaque fois réalisée au moins une surface d'étanchéité annulaire (11.8) qui fait saillie dans la direction axiale au-delà du milieu filtrant (11.1) raccordé latéralement à la partie restante du moyeu (11.5), et **en ce que** les surfaces d'étanchéité annulaires (11.8) s'appliquent les unes contre les autres lorsque les éléments de filtre en forme de disques (11) sont alignés les uns contre les autres.

3. Élément porte-crible (100 ; 100') selon la revendication 2, **caractérisé en ce qu'**entre les surfaces d'étanchéité annulaires (11.8) sont incorporées des bagues d'étanchéité métalliques.

4. Élément porte-crible (100') selon la revendication 2, **caractérisé en ce qu'**entre les surfaces d'étanchéité annulaires (11.8) sont incorporées des bagues d'étanchéité constituées d'une nappe de fibres métalliques.

5. Élément porte-crible (100 ; 100') selon l'une quelconque des revendications 1 à 4, **caractérisé en ce que** les moyeux (11.5) des éléments de filtre en forme de disques (11) sont pressés les uns contre les autres au moyen d'un élément de fixation (18) qui peut être monté sur le tube de support (15 ; 15').

6. Élément porte-crible (100 ; 100') selon la revendication 5, **caractérisé en ce qu'**une plaque d'impact (17) presse au moyen de l'élément de fixation (18) sur les éléments de filtre en forme de disques (11) empilés les uns sur les autres.

7. Élément porte-crible (100 ; 100') selon la revendication 5 ou 6, **caractérisé en ce que** l'élément de fixation (18) présente un épaulement fileté qui peut être vissé dans un alésage fileté dans le tube de support (15 ; 15').

8. Élément porte-crible (100 ; 100') selon la revendication 7, **caractérisé en ce que** l'alésage fileté est disposé dans un cône de déplacement (15.5).

9. Élément porte-crible selon au moins l'une quelconque des revendications précédentes, **caractérisé en ce que** le tube de support présente une section transversale circulaire.

10. Élément porte-crible selon au moins l'une quelconque des revendications précédentes, **caractérisé en ce que** le tube de support présente une section transversale polygonale.

11. Élément porte-crible selon au moins l'une quelconque des revendications précédentes, **caractérisé en ce que** plusieurs cavités de crible sont prévues, lesquelles sont disposées les unes à côté des autres, vu dans la direction d'écoulement.

12. Élément porte-crible selon au moins l'une quelconque des revendications précédentes, **caractérisé en ce que** plusieurs cavités de crible sont prévues, lesquelles sont disposées avec une symétrie spéculaire en face les unes des autres dans l'élément porte-crible.

13. Élément porte-crible (100 ; 100') selon au moins l'une quelconque des revendications précédentes, **caractérisé en ce que** l'élément porte-crible (100 ; 100') est réalisé sous forme de boulon porte-crible rond.

14. Élément porte-crible selon au moins l'une quelconque des revendications précédentes, **caractérisé en ce que** l'élément porte-crible est une plaque rectangulaire.

15. Dispositif de filtration pour la filtration d'un fluide, principalement pour la filtration de polymères en fusion, qui comprend au moins un boîtier avec un alésage de porte-crible et au moins un élément porte-crible selon au moins l'une quelconque des revendications précédentes 1 à 14 monté de manière déplaçable dans celui-ci.
